# EUROPEAN PATENT APPLICATION

(11) **EP 2 963 559 A1**
(43) Date of publication of application: **06.01.2016**
(21) Application number: 14175376.4
(22) Date of filing: 02.07.2014
(51) Int. Cl.: G06F 13/28, G06F 13/38, H04B 10/40

(54) **Optical transceiver**

(71) Applicant: Finisar Germany GmbH, 10553 Berlin (DE)
(72) Inventor: Wissig, Sebastian, 12529 Schönefeld (DE); Funk, Artur, 10585 Berlin (DE)
(74) Representative: Fischer, Uwe

(57) **Abstract**

An embodiment of the invention relates to an optical transceiver (10) capable of communicating with an external device (60), the transceiver comprising a central processing unit (20), a register set (31) for storing transceiver data, and a logic device (30) which is coupled with the central processing unit (20) via a parallel bus (50) and which can be coupled with an external device (60) via a management data input/output, MDIO, interface unit. The register set (31) is located within the logic device (30).

## Description

The invention relates to optical transceivers.

### Background of the invention

U.S. Patent Application Publication US 2012/0207478 A1 discloses an optical transceiver which is capable of communicating with an external device. The transceiver comprises a central processing unit, a register set for storing transceiver data, and a logic device which is coupled with the central processing unit. The logic device is further coupled with the external device via a management data input/output (MDIO) interface.

### Objective of the present invention

An objective of the present invention is to provide a transceiver with improved performance.

A further objective of the present invention is to provide an improved method of operating an optical transceiver.

### Brief summary of the invention

An embodiment of the invention relates to an optical transceiver which is capable of communicating with an external device. The transceiver comprises a central processing unit and a logic device. The logic device is coupled with the central processing unit via a parallel bus. The logic device may further be coupled with an external device via a management data input/output, MDIO, interface. A register set for storing transceiver data, is located within the logic device.

An advantage of this embodiment of the invention is that the logic device is capable of managing the access to the register set alone, i.e. without involving the central processing unit, since the register set is a part of the logic device. In consequence, the logic device may handle read and write requests from external devices without disrupting the work flow of the central processing unit. If and when the central processing unit needs to be involved, the involvement can be scheduled in time-slots which are the least disturbing for the central processing unit. The time slots of the involvement are preferably chosen by the central processing unit upon receipt of an interrupt request from the logic device. In summary, the integration of the register set into the logic device liberates the central processing unit from handling any direct communication with external devices.

The logic device is preferably a field-programmable gate array, FPGA.

The register set is preferably a dual-port memory, one port of which being accessible by the external device via a memory management unit of the logic device and the other port being accessible by the central processing unit.

The transceiver data may define present conditions within the optical transceiver and contain module information.

In addition to the logic device and the central processing unit, the transceiver may comprise further transceiver components such as photodetectors, radiation emitting devices (e. g. lasers), or amplifiers (e. g. transimpedance amplifiers). The central processing unit preferably controls these additional components or at least some of those additional components. As such, the central processing unit may control the present conditions within the optical transceiver and influence the transceiver data.

The logic device is preferably configured to update the transceiver data stored in the register set in response to control signals provided by the central processing unit.

The communication between the central processing unit and the logic device is preferably a master-slave-communication. In this case, the central processing unit preferably operates as master and the logic device preferably operates as slave. In this configuration, the central processing unit is able to allocate time-slots for handling requests of the logic device and/or external devices, in its own discretion and in view of an optimized work flow within the central processing unit.

The logic device is preferably programmed to analyze incoming modification requests that are received from an external device to modify the register set, as to their validity. The logic device preferably ignores or rejects modification requests if they are found invalid, without involving the central processing unit.

If a modification request is found valid, the logic device may inform the central processing unit about the existence of the modification request. The central processing unit is preferably programmed to read the incoming modification request or data contained therein from the logic device at a point in time that is scheduled by the central processing unit at its own discretion.

The logic device is preferably also programmed to analyze incoming read requests from the external device and to ignore or reject read requests that cannot be complied with, without involving the central processing unit.

A further embodiment of the invention relates to a method of operating an optical transceiver that comprises a logic device and a central processing unit. The logic device is coupled with an external device via a management data input/output interface, MDIO, and with the central processing unit via a parallel bus. A register set for storing transceiver data is located in the logic device. The transceiver data define present conditions within the optical transceiver and module information. In response to an incoming request of the external device, data stored in the register set of the logic device are read or modified.

Incoming modification (or write) requests that are received from the external device to modify the register set, are preferably analyzed as to their validity by the logic device.

The logic device preferably ignores or rejects modification requests if they are found invalid or if registers of the register set would be affected which are defined as read only, without involving the central processing unit.

In case of an incoming modification request that is found valid by the logic device, the logic device preferably holds the incoming data in a buffer and informs the central processing unit, via an interrupt request, about the existence of the modification request. The central processing unit preferably reads and/or carries out the modification request at a point in time that is chosen by the central processing unit at its own discretion.

If read requests from the external device are found valid by the logic device, they are preferably complied with by the logic device, without involving the central processing unit, by transmitting the requested data as stored in the register set of the logic device, to the external device.

The central processing unit and the logic device preferably communicate in a master-slave-configuration. The central processing unit preferably operates as master, and the logic device preferably operates as slave.

The data stored in the register set of the logic device are preferably updated with the data acquired by the central processing unit in response to an alteration of the present conditions that occurred within the optical transceiver.

### Brief description of the drawings

In order that the manner in which the above-recited and other advantages of the invention are obtained will be readily understood, a more particular description of the invention briefly described above will be rendered by reference to specific embodiments thereof which are illustrated in the appended drawings. Understanding that these drawings depict only typical embodiments of the invention and are therefore not to be considered to be limiting of its scope, the invention will be described and explained with additional specificity and detail by the use of the accompanying drawings in which
- Figure 1: shows an exemplary embodiment of an optical transceiver, which is connected to an external device,
- Figure 2: shows the optical transceiver of Figure 1 after receiving a read request from the external device,
- Figure 3: shows the optical transceiver of Figure 1 after a receiving a modification request from the external device,
- Figure 4: shows the optical transceiver of Figure 1 while updating data stored in a register set of a logic device with data acquired by a central processing unit, and
- Figure 5: shows a parallel bus between the logic device and the central processing unit of the optical transceiver of Figure 1 in further detail.

### Detailed description of the preferred embodiment

The preferred embodiment of the present invention will be best understood by reference to the drawings, wherein identical or comparable parts are designated by the same reference signs throughout.

It will be readily understood that the present invention, as generally described and illustrated in the figures herein, could vary in a wide range. Thus, the following more detailed description of the exemplary embodiments of the present invention, as represented in the figures, is not intended to limit the scope of the invention, as claimed, but is merely representative of presently preferred embodiments of the invention.

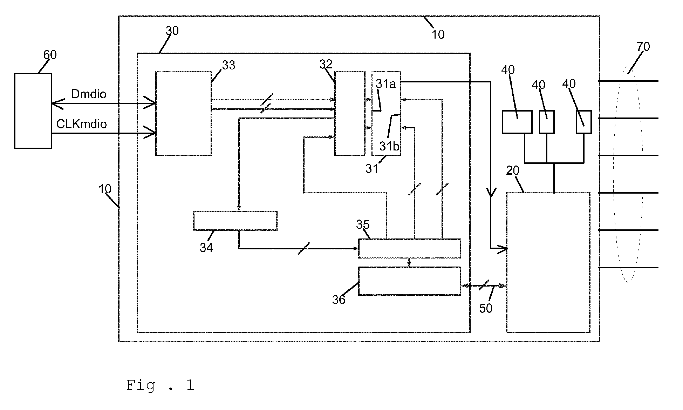

Figure 1 shows an embodiment of an optical transceiver 10 which comprises a central processing unit 20, a logic device 30, and one or more transceiver components 40. The transceiver components 40 may include one or more photodetectors, one or more radiation emitting devices such as lasers, one or more amplifiers such as transimpedance amplifiers, and/or other elements which are not depicted in Figure 1 for the purpose of clarity. The photodetectors and radiation emitting devices may be connected with outside optical data transmission devices via an optical data interface 70.

The logic device 30 is preferably composed of or formed by a field-programmable gate array (FPGA). The logic device 30 comprises a register set 31, a memory management unit 32, a MDIO (management data input/output) unit 33, a buffer 34, an address decoding unit 35, and an interface unit 36.

The interface unit 36 is connected to the central processing unit 20 via a parallel bus 50 and configured to allow for a master-slave-communication between the logic device 30 and the central processing unit 20. Within the master-slave-communication, the central processing unit 20 preferably operates as master and the logic device 30 as slave.

The register set 31 is a dual port memory 31 having two ports 31a and 31b. Port 31a can be accessed and modified by the memory management unit 32, and the other port 31b can be accessed and modified by the central processing unit 20, the latter via the interface unit 36 and the address decoding unit 35. The register set 31 stores transceiver data which define present conditions within the optical transceiver 10 as well as module information which, for instance, define the characteristic and/or type of the transceiver 10.

The optical transceiver 10 is connected to an external device 60 via its a MDIO unit 33. The MDIO unit 33 allows receiving MDIO data Dmdio and an MDIO clock signal CLKmdio from the external device 60. Further, the MDIO unit 33 allows sending MDIO data Dmdio from the optical transceiver 10 to the external device 60.

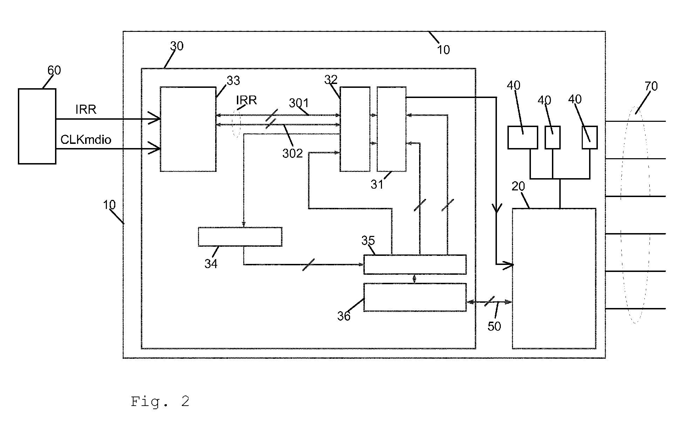

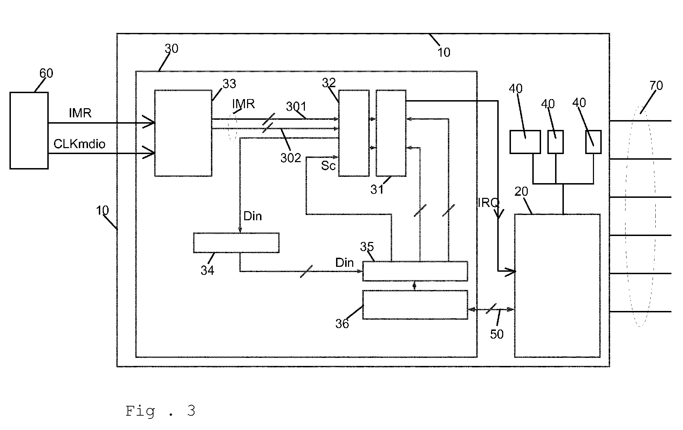

In response to an incoming request of the external device 60 the optical transceiver 10 preferably operates as follows:
Incoming read requests IRR from the external device 60 (see Figure 2) are transferred from the MDIO unit 33 to the memory management unit 32 via a data bus 301 and an address bus 302. The memory management unit 32 analyzes the incoming read requests IRR and ignores or rejects them, if they cannot be complied with. If an incoming read request IRR is found valid the memory management unit 32 reads the requested data from the register set 31 and transfers the requested data via the data bus 301, the address bus 302 and the MDIO unit 33 to the external device 60. The central processing unit 20 is not involved regardless of whether the read requests IRR are found valid or not.
Incoming modification requests IMR (see Figure 3) that are received from the external device 60 to modify the register set 31, are also analyzed as to their validity by the memory management unit 32, only.

If the modification requests IMR are found invalid or if the affected address registers of the register set 31 are defined as read only, the memory management unit 32 ignores or rejects the respective modification requests IMR. The decision to ignore or reject modification requests IMR is solely made by the memory management unit 32, i.e. without involving the central processing unit 20.

If the modification requests IMR are found valid by the memory management unit 32, the memory management unit 32 stores the incoming data Din that are defined by the incoming modification request IMR, in the buffer 34. Further the memory management unit 32 informs the central processing unit 20 via an interrupt request IRQ about the existence of the modification request IMR.

Before, after or at the same time (i.e. simultaneously) the memory management unit 32 carries out the modification request IMR and stores the incoming data Din in the corresponding address registers of the register set 31.

The central processing 20 unit reads the data Din from the buffer 34 via the parallel bus 50, the interface unit 36 and the address decoding unit 35 at a point in time that is chosen by the central processing unit 20 at its own discretion.

In order to clear the buffer 34, the address decoding unit 35 may send a control signal SC to the memory management unit 32 after the central processing unit 20 has read the data Din. The memory management unit 32 may then erase the data stored in the buffer 34.

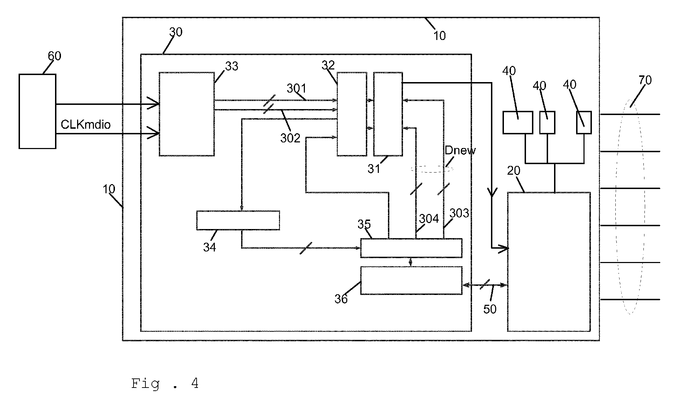

The data stored in the register set 31 of the logic device 10 may also be updated with new data Dnew (see Figure 4) which are acquired by the central processing unit 20 in response to an alteration of the present conditions of the optical transceiver 10, for instance in response to an alteration of the present conditions of any of the transceiver components 40. To this end the central processing unit 20 is connected to the register set 31 via the parallel bus 50, the interface unit 36, the address decoding unit 35, a data bus 303, and an address bus 304. Via these components, the central processing unit 20 may send control signals which comprise the new data Dnew, in order to update the register set 31.

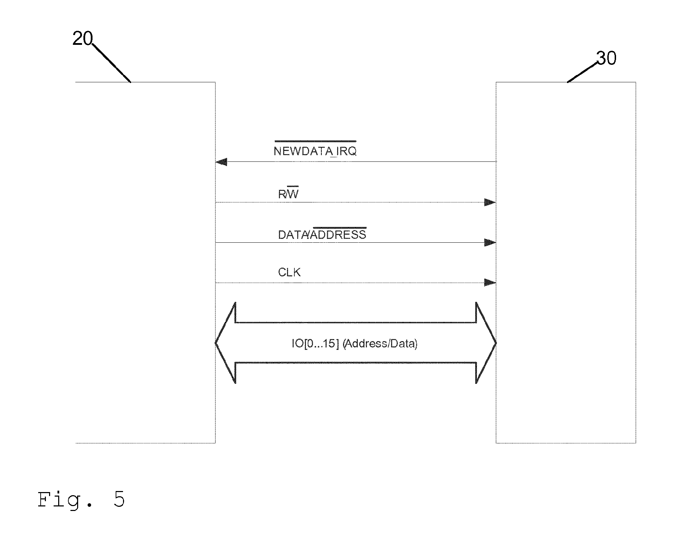

Figure 5 shows the parallel bus 50 between the central processing unit 20 and the logic device 30 in further detail.

It can be seen that the parallel bus 50 allows transmitting a plurality of signals which are referred to in Figure 5 as *N̅E̅W̅D̅A̅T̅A̅_̅I̅R̅Q̅, READlW̅R̅I̅T̅E̅*, *DATA*/*A̅D̅D̅R̅E̅S̅S̅, CLK ,* and *IO*[0...15](*AddresslData*)*.*

The central processing unit 20 and the logic device 30 are configured to communicate over the parallel bus 50 in a master-slave-configuration. The central processing unit operates as master, and the logic device operates as slave. The communication is operated by the signals *N̅E̅W̅D̅A̅T̅A̅_̅I̅R̅Q̅*, *READlW̅R̅I̅T̅E̅, DATAlA̅D̅D̅R̅E̅S̅S̅, CLK,* and *IO*[0...15](*Address*/ *Data*)*.*

### Reference Signs

- 10: optical transceiver
- 20: central processing unit
- 30: logic device
- 31: register set
- 32: memory management unit
- 33: MDIO unit
- 34: buffer
- 35: an address decoding unit
- 36: interface unit
- 40: transceiver components
- 50: parallel bus
- 60: external device
- 301: data bus
- 302: address bus
- 303: data bus
- 304: address bus
- *CLK*: clock signal on parallel bus
- CLKmdio: MDIO clock signal
- *DATAlA̅D̅D̅R̅E̅S̅S̅*: bus signal
- Din: incoming data
- Dnew: data
- Dmdio: MDIO data
- IMR: incoming modification request
- IRR: incoming read request
- *N̅E̅W̅D̅A̅T̅A̅_̅I̅R̅Q̅*: bus signal
- *READ*/*W̅R̅I̅T̅E̅*: bus signal
- SC: control signal
- U: voltage
- *IO*[0...15](*Address*/*Data*): bus signal

## Claims

1. Optical transceiver (10) capable of communicating with an external device (60), the transceiver comprising:
- a central processing unit (20);
- a register set (31) for storing transceiver data; and
- a logic device (30) which is coupled with the central processing unit (20) via a parallel bus (50) and which can be coupled with an external device (60) via a management data input/output, MDIO, interface unit,
**characterized in that**
the register set (31) is located within the logic device (30).

2. The optical transceiver of claim 1,
**characterized in that**
the logic device (30) is a field-programmable gate array, FPGA.

3. The optical transceiver of any of the preceding claims,
**characterized in that**
the register set (31) is a dual-port memory, one port (31a) of which being accessible by the external device (60) via a memory management unit (32) of the logic device and the other port (31b) being accessible by the central processing unit (20).

4. The optical transceiver of any of the preceding claims,
**characterized in that**
said transceiver data define present conditions within the optical transceiver (10) and contain module information.

5. The optical transceiver of claim 4,
**characterized in that**
the logic device (30) is configured to update the transceiver data stored in the register set (31) in response to control signals provided by the central processing unit (20).

6. The optical transceiver of any of the preceding claims, **characterized in that**
- the communication between the central processing unit (20) and the logic device (30) is a master-slave-communication, and
- wherein the central processing unit (20) is configured to operate as master and the logic device (30) is configured to operate as slave.

7. The optical transceiver of any of the preceding claims, **characterized in that**
- the logic device (30) is programmed to analyze incoming modification requests (IMR) that are received from the external device (60) to modify the register set (31), as to their validity,
- the logic device (30) is further programmed to ignore or reject modification requests (IMR) if they are found invalid, without involving the central processing unit (20),
- the logic device (30) is further programmed to inform the central processing unit (20) about the existence of a modification request (IMR) received from the external device (60), if the modification request (IMR) is found valid, and
- the central processing unit (20) is programmed to read the incoming modification request (IMR) or data (Din) contained therein from the logic device (30) at a point in time that is scheduled by the central processing unit (20) at its own discretion.

8. The optical transceiver of any of the preceding claims,
**characterized in that**
the logic device (30) is programmed to analyze incoming read requests (IRR) from the external device (60) and to ignore or reject read requests (IRR) that cannot be complied with, without involving the central processing unit (20).

9. Method of operating an optical transceiver (10) that comprises
- a logic device (30) which is coupled with an external device (60) via a management data input/output interface (33), MDIO, and coupled with a central processing unit (20) of the transceiver (10) via a parallel bus (50), and
- a register set (31) for storing transceiver data which define present conditions within the optical transceiver (10) and module information,
- wherein in response to an incoming request (IMR, IRR) of the external device (60), transceiver data stored in the register set (31) are read or modified,
**characterized in that**
the transceiver data are stored in a register set (31) that is located in the logic device (30).

10. The method of claim 9,
**characterized in that**
- the logic device (30) analyzes incoming modification requests (IMR) that are received from the external device (60) to modify the register set (31), as to their validity without involving the central processing unit (20), and
- the logic device (30) ignores or rejects modification requests (IMR) if they are found invalid or if registers of the register set (31) would be affected which are defined as read only, without involving the central processing unit (20).

11. The method of any of the preceding claims 9-10,
**characterized in that**
- in case of an incoming modification request (IMR) that is found valid by the logic device (30), the logic device (30) holds the incoming data (Din) in a buffer (34) and informs the central processing unit (20), via an interrupt request (IRQ), about the existence of the modification request (IMR), and
- the central processing unit (20) reads and/or carries out the modification request (IMR) at a point in time that is chosen by the central processing unit (20) at its own discretion.

12. The method of any of the preceding claims 9-11,
**characterized in that**
- the logic device (30) analyzes incoming read requests (IRR) that are received from the external device (60), as to their validity without involving the central processing unit (20), and
- the logic device (30) complies with the incoming read requests (IRR) if they are found valid, without involving the central processing unit (20), by transmitting the requested data as stored in the register set (31) of the logic device (30) to the external device (60).

13. The method of any of the preceding claims 9-12,
**characterized in that**
- the central processing unit (20) and the logic device (30) communicate in a master-slave-configuration,
- wherein the central processing unit (20) operates as master, and
- wherein the logic device (30) operates as slave.

14. The method of any of the preceding claims 9-13,
**characterized in that**
the data stored in the register set (31) of the logic device (30) are updated with new data (Dnew) acquired by the central processing unit (20) in response to an alteration of the present conditions that occurred within the optical transceiver (10).
